Europäisches Patentamt

European Patent Office

Office européen des brevets

(11) Publication number: **0 150 798**
**B1**

# EUROPEAN PATENT SPECIFICATION

(45) Date of publication of patent specification: 31.05.89

(21) Application number: 85100630.4

(22) Date of filing: 22.01.85

(51) Int. Cl.⁴: **G 09 F 9/30,** G 09 F 9/35, G 09 G 3/36

(54) Liquid crystal displays operated by amorphous silicon alloy diodes.

(30) Priority: 23.01.84 US 573004
03.12.84 US 675941

(43) Date of publication of application:
07.08.85 Bulletin 85/32

(45) Publication of the grant of the patent:
31.05.89 Bulletin 89/22

(84) Designated Contracting States:
AT BE CH DE FR GB IT LI LU NL SE

(56) References cited:
DE-A-3 201 122
FR-A-2 518 788
US-A-4 226 898
US-A-4 251 136

(73) Proprietor: ENERGY CONVERSION DEVICES, INC.
1675 West Maple Road
Troy Michigan 48084 (US)

(72) Inventor: Yaniv, Zvi
27610 Arlington Court
Southfield Michigan 48076 (US)
Inventor: Cannella, Vincent D.
18625 Devonshire
Birmingham Michigan (US)
Inventor: Hansell, Gregory L.
433 Appletree Court
Camarillo California 93010 (US)
Inventor: Swartz, Louis D.
5695 Groveland Road
Holly Michigan 48442 (US)

(74) Representative: Müller, Hans-Jürgen, Dipl.-Ing. et al
Müller, Schupfner & Gauger Lucile-Grahn-Strasse 38 Postfach 80 13 69
D-8000 München 80 (DE)

Courier Press, Leamington Spa, England.

## Description

The present invention relates generally to displays and more particularly to displays which are driven by diodes formed from deposited semiconductor materials.

There are many applications wherein liquid crystal displays are utilized to advantage. For example, liquid crystal displays find use in digital watches, digital clocks, calculators, pocketsized television receivers, and various forms of portable games, to name just a few.

Liquid crystal displays generally include a plurality of pixels (picture elements) arranged in rows and columns. Each pixel includes a pair of electrodes. As is well known, when a voltage is applied across the electrodes, the optical properties of the liquid crystal material can be changed to provide a light or dark display depending upon the type of liquid crystal material used and the desired mode of operation of the display.

To obtain a usable display, the voltage potential across the electrodes of each pixel must be selectively applied. In the prior art, the selective application of these voltage potentials has been accomplished through the use of thin film transistors. While thin film transistors are generally successful in these applications, they can only be used for small area liquid crystal displays. Conventional thin film transistors also exhibit relatively high power dissipation and low frequency operation. This limits the number of pixels which can be driven in a liquid crystal display which in turn limits the liquid crystal displays areas.

Another problem in using thin film transistors in liquid crystal displays is yield. Virtually one-hundred percent of all of the thin film transistors must be operational to obtain a usable display. Such yields are difficult to achieve over small display areas and virtually impossible to achieve for large area displays because the making of thin film transistors requires numerous process steps, many of which require extremely accurate photolithography. Accurate or precise photolithography is required to control important physical device dimensions, principal among them being the source to drain spacing which determines, in conventional planar thin film transistors, the length of the current conduction channel between the source and drain. The channel length dramatically effects both the device current and operating frequency limit. As a result, the high yields required cannot be readily achieved for large display areas with conventional photolithography techniques.

The use of diodes to drive displays is known (FR-A-2 518 788). However, such diode driven displays were limited to diode devices which are not appropriate for large area displays employing potentially thousands of pixels. Such displays would be necessarily and unduly complicated both physically to implement the individual pixels and electrically to address the individual pixels.

The objective of the invention is to overcome deficiencies exhibited by thin film transistors by using diodes to drive the display pixels. The diodes shall be formed without the need of precise photolithography and in fewer process steps than that required to form thin film transistors.

The invention is claimed in claim 1 and further embodiments are claimed in sub-claims.

Each isolation diode can include a single diode or alternately a plurality of vertically arrayed series coupled diodes. The isolation devices may be formed as a diode ring.

A subassembly for a display pixel is also provided by the present invention. The subassembly includes a substrate, a pixel electrode formed thereon, an address line formed adjacent the pixel electrode, and first and second isolation structures formed on the address line and the pixel electrode respectively. A deposited layer of metal connects the first isolation structure to the pixel electrode. A second layer of metal connects the second isolation structure to a second address line.

The isolation devices of the subassembly and the display of the present invention can be diodes formed from an amorphous silicon alloy. The alloy may contain hydrogen and/or fluorine.

The invention also provides for a method of making a subassembly for a display having at least one pixel and a pair of isolation devices. The method includes the steps of providing a substrate, depositing a conductive layer over the substrate, depositing a first metal layer over the conducting material, depositing a first doped semiconductor layer over the first metal layer, depositing a substantially intrinsic semiconductor layer over the first doped layer, depositing a second doped semiconductor layer over the intrinsic layer; the second doped layer being opposite in conductivity with respect to the first doped layer, and depositing a second metal layer over the second doped semiconductor layer. The method further provides for removing portions of the second metal layer so as to leave discrete regions thereof to define the locations of isolation devices, removing portions of the semiconductor layers while using the discrete metal regions as masks to form the isolation devices, removing portions of the first metal layer to form an address line with one of the isolation devices formed thereon, removing portions of the conductive material to form a first pixel electrode with the other isolation device positioned thereon, coupling the first isolation device to the pixel electrode, forming a second address line insulated from the first address line and coupled to the other isolation device. The method also provides for forming a second pixel electrode spaced apart from and substantially parallel to the first pixel electrode and applying light influencing material between the pixel electrodes.

The method also provides for carrying out the steps of depositing the layers of semiconductor material in a partial vacuum such that the partial vacuum is continuously maintained during the deposition of the layers of semiconductor material. The method also provides for forming the pixel electrodes of a transparent conducting material such as indium tin oxide.

The method also provides for forming a plurality of vertically arrayed isolation devices out of a plurality of deposited amorphous semiconductor alloy layers. The plurality of vertically overlying p-i-n amorphous silicon alloy layers can be etched so as to form first and second vertically arrayed, series coupled, stacks of isolation diodes. A series coupled stack of amorphous silicon alloy isolation devices will support a greater reverse bias voltage than will a single isolation device.

The method also provides for forming a diode ring coupled between an address line and a pixel electrode out of a plurality of deposited amorphous semiconductor alloy layers. The diode ring can include parallel coupled isolation devices each of which can be formed from one or more series coupled amorphous silicon alloy diodes. The isolation devices are parallel coupled with reverse polarity to form the ring. The method provides for forming the first and second isolation devices on the address line and on a region of the pixel electrode respectively, offset with respect to one another. The method also provides for depositing first and second metal layers to couple the first isolation device formed on the address line, to the pixel electrode and to couple the second isolation device, formed on the pixel electrode, to the address line.

The invention also provides for a subassembly for a display having an insulative substrate, conducting electrode formed thereon and first and second nonintersecting deposited address lines coupled to the electrode. The address lines are formed essentially parallel to one another.

The light influencing material can be a liquid crystal display material including conventional nematic liquid crystal display materials.

The preferred embodiment of this invention will now be described by way of example, with reference to the drawings accompanying this specification in which:

Figure 1 is a cross-sectional side view of a liquid crystal display pixel;

Figure 2 is a top plan view as seen along lines 2-2 of Figure 1;

Figure 3 is a schematic circuit diagram illustrating the equivalent circuit of the liquid crystal display pixel of Figure 1;

Figure 4 is a cross-sectional side view of another liquid crystal display pixel;

Figure 5 is a schematic circuit diagram illustrating the equivalent circuit of the liquid crystal display pixel of Figure 4;

Figure 6 is a cross-sectional side view of another liquid crystal display pixel;

Figure 7 is a schematic circuit diagram illustrating the equivalent circuit of the liquid crystal display pixel of Figure 6;

Figure 8 is a cross-sectional side view of a liquid crystal display pixel embodying the present invention;

Figures 9-15 are cross-sectional side views illustrating the method of making the liquid crystal display pixel of Figure 8 at various stages thereof in accordance with the present invention;

Figure 16 is a cross-sectional side view of another liquid crystal display pixel embodying the present invention;

Figure 17 is a cross-sectional side view illustrating in part another method in accordance with the present invention;

Figure 18 is a schematic circuit diagram of the liquid crystal display pixel of Figure 16;

Figure 19 is a schematic circuit diagram illustrating the equivalent circuit of another embodiment of a liquid crystal display pixel embodying the present invention;

Figure 20 is a cross-sectional side view illustrating one step in the method of making the liquid crystal display pixel illustrated schematically in Figure 19;

Figure 21 is a fragmentary top planar view of the liquid crystal display pixel illustrated in Figure 19;

Figure 22 is a cross-sectional side view of another step in the processing of the liquid crystal display pixel of Figures 19 and 21;

Figure 23 is a cross-sectional side view of the liquid crystal display pixel of Figures 19 and 21.

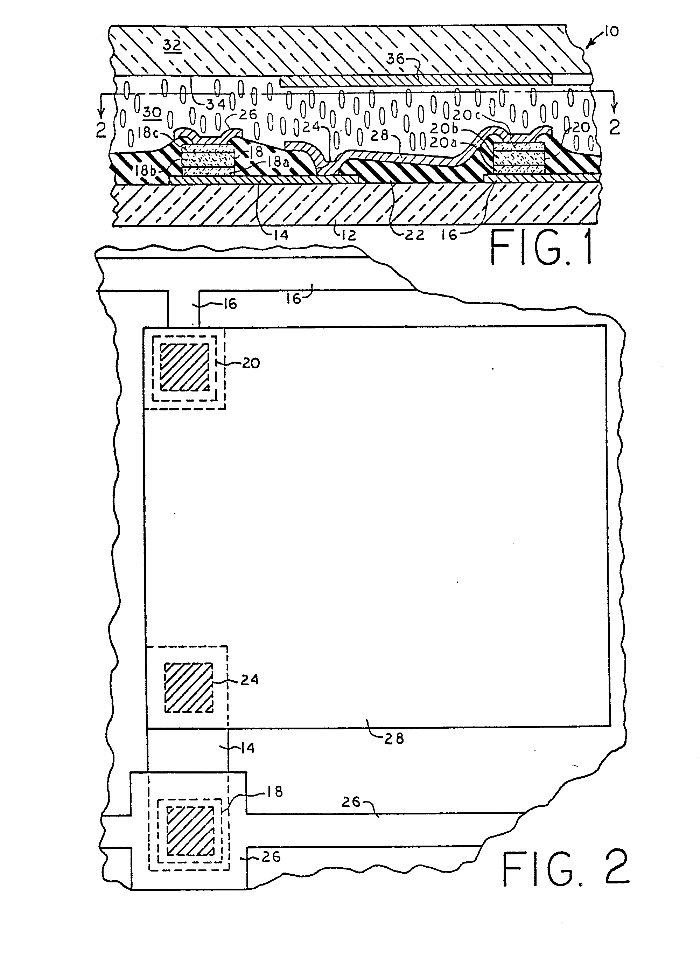

Referring now to Figures 1 and 2, they illustrate a display pixel 10. Although just one display pixel 10 is illustrated, it can be appreciated that many such pixels can be formed in, for example, a row and column arrangement to provide a complete liquid crystal display. It will be understood that none of the figures are drawn to scale. It will also be understood the proportionate size of some of the electronic structures may be enlarged for the purpose of providing an enabling disclosure.

The display pixel 10 includes an insulative substrate 12 which can be formed from glass, for example. Formed on the glass substrate 12 is an interconnect bus or lead 14 and a first address lead 16. The interconnect lead 14 and first address lead 16 can be formed from a conductive material such as metal, for example, aluminum, molybdenum, or a molybdenum tantalum alloy. Other suitable metals are chromium, tantalum tungsten, palladium and platinum. The interconnect lead 14 and first address lead 16 are formed by, for example, S-gun magnetron sputtering the metal over the entire surface area of the glass substrate 12 and then removing selected portions of the deposited metal by utilizing a mask and photolithography techniques of the type well known in the art.

The display pixel 10 further includes a pair of diodes 18 and 20 formed on the interconnect lead 14 and first address lead 16, respectively. The diodes 18 and 20 are preferably formed from a deposited semiconductor material. The deposited semiconductor material is preferably an amorphous semiconductor alloy including silicon. The amorphous silicon alloy can also include hydrogen and/or fluorine and can be deposited by plasma assisted chemical vapor deposition i.e. glow discharge as disclosed, for example, in United States Patent No. 4,226,898 which issued on October 7, 1980 in the names of Stanford R. Ovshinsky and Arun Madan for Amorphous Semiconductors Equivalent To Crystalline Semiconductors produced By A Glow Discharge Process. The diodes 18 and 20 preferably have a p-i-n configuration formed by a first doped region 18a and 20a, which can be p-type, an intrinsic region 18b and 20b overlying the first doped regions 18a and 20a respectively, and a second doped region 18c and 20c, which can be n-type, overlying the intrinsic regions 18b and 20b respectively.

The diodes 18 and 20 can be formed more specifically by depositing the previously mentioned amorphous silicon alloy regions over the entire surface area of the substrate 12 and interconnect lead 14 and first address lead 16 and thereafter selectively etching portions of the amorphous silicon alloy regions by utilizing a suitable mask and conventional photolithography techniques. The mask utilized during the etching process preferably defines a diode configuration wherein each diode is about 20 to 50 microns on a side. Representative thicknesses for the amorphous silicon alloy regions can be, for example, 300 Angstroms to 1,000 Angstroms and preferably 500 Angstroms for the p-type regions, 1,000 Angstroms to 10,000 Angstroms and preferably 3,000 Angstroms for the intrinsic regions, and 100 Angstroms to 500 Angstroms and preferably 200 Angstroms for the n-type regions.

Formed over the interconnect lead 14, the substrate 12, and the first address lead 16, and in between the diodes 18 and 20 is a layer of insulating material 22. The layer of insulating material 22 can be formed from any deposited insulator such as silicon oxide ($Si_xO_y$) or silicon nitride ($Si_xN_y$), or a polyimide, for example. The insulating layer 22 defines an opening 24 which communicates with the interconnect lead 14. The configuration of the insulating layer 22 can be obtained by roller, extrusion, or spin coating the polyimide, for example, over the entire surface area, spin coating a layer of photoresist over the polyimide layer, and then exposing and developing out both of the photoresist and the polyimide using a further mask. This step forms the opening 24 communicating with the interconnect lead 14 and uncovers upper surface portions of the n-type amorphous silicon alloy regions 18c and 20c of diodes 18 and 20.

The display pixel 10 further includes a second address lead 26 in electrical contact with the n-type region 18c of diode 18 and a first electrode 28 which is an electrical connection with the interconnect lead 14 through the opening 24 and the n-type region 20c of diode 20. The first electrode 28 and the second address lead 26 can be formed from any of the metals previously referred to with respect to the interconnect lead 14 and the first address lead 16 by sputtering the metal over the entire surface area of the polyimide 22, the exposed surface portions of the diodes 18 and 20, and the opening 24. The second address lead 26 and the first electrode 28 can then be configured by utilizing a suitable mask and conventional photolithography techniques.

The address leads 16, 26 are formed out of deposited metal essentially parallel to one another, as can be seen from Figure 2. and both are coupled to the first electrode 28. The diodes 18, 20 form an isolator coupled to the first electrode 28. The isolator formed of the diodes 18, 20 has first and second inputs to which the address lines 26, 16 respectively are coupled.

Forming the address leads 16, 26 so that they do not cross is advantageous from a manufacturing perspective. When address lines cross a layer of insulator, such as silicon dioxide, must be positioned therebetween so as to isolate one address line from the other. Such insulator pads at times are formed with pinhole defects that result in the two address lines coming into electrical contact with one another. Elimination of these crossovers reduces the possibility of such defects. Additionally, elimination of these crossovers simplifies the overall structure of the display.

Speed of addressing is also enhanced by elimination of crossovers. Each crossover forms a capacitor with the insulator forming a dielectric between the adjacent regions of the respective address lines. Since a given array could have a plurality of crossover points, a substantial reduction in capacitance can result.

It must be appreciated that the structures illustrated in Figures 1 and 2 are not drawn to scale and that the first electrode 28 defines the display area of the display pixel 10. The first electrode 28 can be configured in a square configuration as illustrated in Figure 2 and can be, for example, 300 microns to 2,000 microns on a side depending on the overall size of the finished display matrix and the desired aspect ratio.

With the first electrode 28 contacting the interconnect lead 14 through the opening 24, the diodes 18 and 20 are connected together in series relation. As can also be noted in Figure 1, the address leads 16 and 26 are only in electrical connection with the first electrode 28 through the diodes 18 and 20.

Overlying the resulting structure described above, is a layer of light influencing material 30. By the term "light influencing material" is meant any material which emits light or can be used to selectively vary the intensity, phase, or polarization of light either being reflected from or transmitted through the material. Liquid crystal material is only one such material having these characteristics. The light influencing material 30 can be of any conventional variety, as for example, nematic liquid crystal display material.

The display pixel 10 is completed with a top transparent insulative plate 32 formed from, for example, glass. On the inner surface 34 of the insulative plate 32 is formed a layer of transparent conductive material 36 which can be, for example, indium tin oxide. The indium tin oxide layer 36 forms a second electrode of the display pixel 10 which is in contact with the liquid crystal material 30. It is configured to have the same dimension as

the first electrode 28 and is aligned therewith. The top insulative plate 32 is polarized in a manner well known in the art consistent with the type of liquid crystal display material (light influence material 30) utilized in the display pixel 10. An alignment coating of a conventional type can be applied over the first electrode 28 for the purpose of aligning molecules in the liquid crystal display material 30.

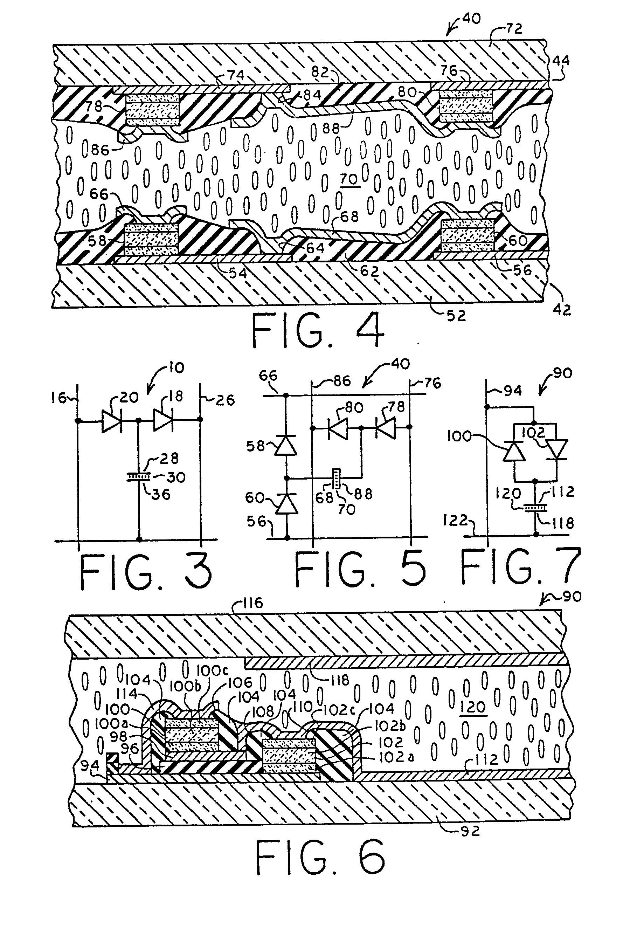

Referring now to Figure 3, it illustrates the equivalent circuit diagram of the pixel 10 of Figure 1. As can be noted from Figure 3, the pixel 10 includes the address leads 16 and 26, a pair of series connected diodes 18 and 20 coupled between the address leads 16 and 26, and the first conductive electrode 28 coupled between the diodes. The pixel 10 further includes the second electrode 36 spaced from the first electrode 28. In between the electrodes 28 and 36 is the liquid display material 30.

As previously explained, the useful life of a nematic liquid crystal display can be extended if the polarity of the applied voltage potential is reversed during alternate frames. This can be accomplished with the pixel 10 of Figure 1 by impressing a positive potential onto first address lead 16 and a negative potential onto the second electrode 36 during one frame to forward bias diode 20 and by impressing a negative potential onto the second address lead 26 and a positive potential on the second electrode 36 during the next frame. Repeating this sequence causes the potential applied to the liquid crystal display material to be reversed during alternate frames.

Referring now to Figure 4, it illustrates another liquid crystal display pixel 40 structured in accordance with another embodiment of the present invention. The pixel 40, as will be appreciated hereinafter, includes two pairs of diodes and is formed by first and second subassemblies 42 and 44 respectively.

Each of the subassemblies 42 and 44 are substantially identical to the portion of the liquid crystal display pixel 10 of Figure 1 beneath the liquid crystal display material 30. Essentially, the second subassembly 44 is the mirror image of the first subassembly 42.

Like the pixel 10 of Figure 1, the first subassembly 42 includes an insulative substrate 52 which can be formed from, for example, glass. The first subassembly 42 further includes an interconnect lead 54, a first address lead 56, and a first pair of diodes 58 and 60 which can be substantially identical to the p-i-n diodes 18 and 20 of pixel 10. Between the diodes 58 and 60 and defining an opening 64 communicating with the interconnect lead 54 is a layer of insulative material 62 which can be a polyimide, for example. The first subassembly 42 is completed with a second address lead 66 and a first electrode 68. The first subassembly 42 can be fabricated by the same method as described with respect to the pixel 10 of Figure 1 and therefore need not be reiterated herein.

The procedure by which the first subassembly 42 is fabricated can be repeated to provide the second subassembly 44. To that end, as can be noted from the Figure, the second subassembly 44 also includes an insulative substrate 72, an interconnect lead 74, a first address lead 76, a second pair of diodes 78 and 80, an insulating layer 82 defining an opening 84 communicating with interconnect lead 74, a second address lead 86, and a second electrode 88. If the liquid crystal display material 70 between the subassemblies 42 and 44 is to be viewed through the second subassembly 44, then the second electrode 88 should be formed from a transparent conductive material, such as, for example, indium tin oxide and the insulative substrate 72 should be formed from a transparent material such as glass which is polarized in a manner consistent with the liquid crystal display material 70 utilized between the subassemblies. It will be understood that conventional molecular alignment coatings and polarizers will be incorporated into the subassemblies, such as 42 and 44, disclosed herein as would be known to those of skill in the art.

As was the case with the address lines 16, 26 (referred to in Figure 1) the address lines 56, 66 and 76, 86 (in Figure 4) are formed with no crossovers. Each pair of address lines 56, 66 and 76, 86 is coupled to a respective electrode 68 or 88. The structure of Figure 4 has the same advantages as does the previously discussed structure of Figures 1, 2 with respect to the noncrossing address lines.

Referring now to Figure 5, it illustrates the equivalent circuit diagram of the pixel 40 of Figure 4. As can be noted from the diagram, the pixel 40 includes a first pair of diodes 58 and 60 and a second pair of diodes 78 and 80. Each pair of diodes is coupled in series relation. The pixel 40 further includes a first pair of address leads 56 and 66 coupled to the respective ends of the series coupled diodes 58 and 60 and a second pair of address leads 76 and 86 coupled to respective ends of the other pair of series coupled diodes 78 and 80. The first electrode 68 is coupled to the junction of the diodes 58 and 60 and the second electrode 88 is coupled to the junction of the diodes 78 and 80. Lastly, liquid crystal display material 70 is disposed between the electrodes 68 and 88.

Like the pixel 10 of Figure 1, the potential applied to the liquid crystal material 70 can be reversed during alternate frames. During one frame, a positive potential can be applied to address lead 76 and a negative potential to address lead 66. During alternate frames, a positive potential can be applied to address lead 56, and a negative potential to address lead 86. In this manner, the potential applied to the liquid crystal material 70 can be reversed during alternate frames.

Referring now to Figure 6, it illustrates a further liquid crystal display pixel 90. The pixel 90 is formed on an insulative substrate 92, such as glass, for example. Formed on the glass substrate 92 is a first address lead 94. The first address lead 94 can be formed from a conductive metal as in the previous embodiments and can be, for example, aluminum, molybdenum, or a molybdenum tantalum alloy. Other suitable metals are chromium, tantalum tungsten, palladium, and platinum. The first address lead 94 can be formed by, for example, S-gun magnetron sputtering the metal over the entire surface area of the glass substrate 92 and then removing seleted portions of the deposited metal by using a mask and photolithography techniques of the type well known in the art.

The pixel 90 further includes insulating layer 96 and insulating portions 104. The insulating layer 96 and portions 104 can be formed from any deposited insulator such as silicon oxide or silicon nitride. During the photolithography step in forming the insulating portions 104, openings 106, 108, and 110 can be formed therein to expose surface portions of the n-type regions of the diodes 100 and 102 and a surface portion of the first interconnect lead 98.

The pixel 90 further includes a bottom electrode 112 and a second interconnect lead 114. The bottom electrode 112 and second interconnect lead 114 can be formed from any of the metals previously referred to and by S-gun magnetron sputtering the metal over the entire surface area and thereafter removing selected portions thereof by conventional photolithography techniques. As will be noted from Figure 6, the second interconnect lead 114 contacts the address lead 94 and the n-type region 100c of diode 100 through the opening 106 of the insulating portions 104. The bottom electrode 112 contacts the first interconnect lead 98 through the opening 108 and the n-type region 102c of diode 102 through the opening 110. As a result, the anode of diode 102 is coupled to the cathode of diode 100 and the anode of diode 100 is coupled to the cathode of diode 102. Also, the joint connection between the anode of diode 100 and the cathode of diode 102 is coupled to the first or bottom electrode 112.

The pixel 90 further includes an insulative transparent plate 116 which has a transparent conductive material 118 deposited on its inner surface to form the second electrode of the pixel 90. The transparent conductor 118 is configured to have the same dimensions as the effective dimensions of the bottom electrode 112 and is aligned therewith. Disposed between at least the electrodes 112 and 118, and in contact therewith, is liquid crystal display material 120, which can be, for example, nematic liquid crystal material of the type well known in the art. The top transparent plate 116 as well as the lower plate 92 can be, as in the previous embodiments, polarized in a manner consistent with the type of liquid crystal display material 120 utilized in the display.

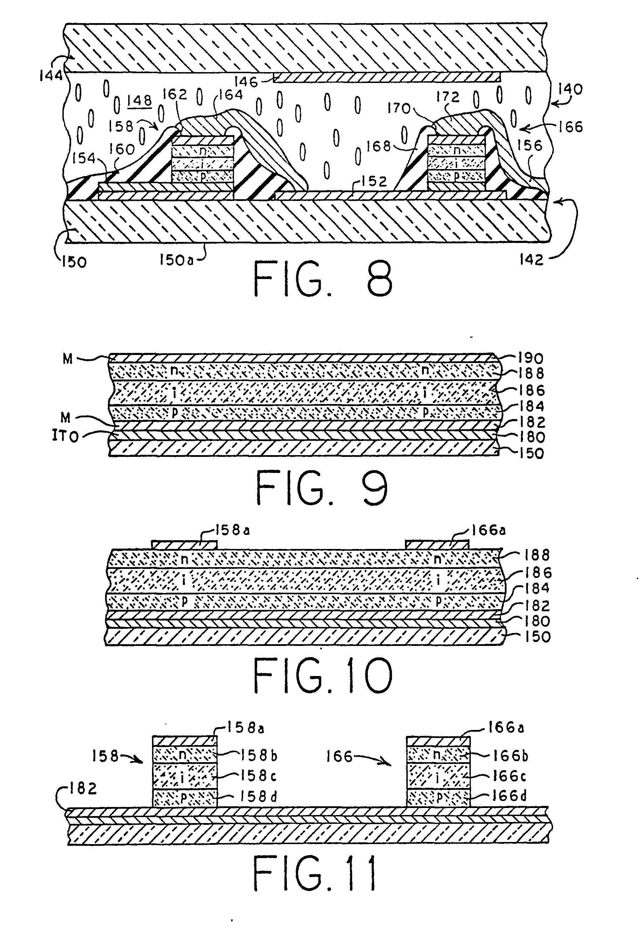

Referring now to Figure 7, it illustrates the equivalent schematic circuit diagram of the liquid crystal display pixel 90 of Figure 6. As can be noted in Figure 7, the pixel includes the pair of diodes 100 and 102 with the cathode of diode 100 and the anode of diode 102 coupled together and also coupled to the first address lead 94. The anode of diode 100 and the cathode of diode 102 are also coupled together and to the first electrode 112. The second electrode 118 is coupled to a second address lead 122 (not shown in Figure 6) and the liquid crystal display material 120 is disposed between and in electrical contact with at least the electrodes 112 and 118.

Like the pixels of the previous embodiments, the potential applied to the liquid crystal material 120 can be reversed during alternate frames. During one frame, a positive potential can be applied to first address lead 94 and a negative potential to second address lead 122. During alternate frames, a positive potential can be applied to second address lead 122, and a negative potential to first address lead 94. In this manner, the potential applied to the liquid crystal material 120 can be reversed during alternate frames.

Figure 8 illustrates an embodiment of the present invention. A single pixel 140 of a display which incorporates a subassembly 142 is illustrated in Figure 8. Spaced apart from the subassembly 142 is an insulating transparent substrate 144 which can be formed of glass and upon which is formed a pixel electrode 146. The pixel electrode 146 may be formed of transparent indium tin oxide. Between the substrate 144, the pixel electrode 146 and the subassembly 142 is a region 148 which is filled with a light influencing material. For example, nematic liquid crystal material of a conventional type may be used.

The subassembly 142 includes an insulating substrate 150, such as glass, upon which is formed a pixel electrode 152. The subassembly 142 also includes a first address line 154 formed on the insulating substrate 150 and a second address line 156 insulated from the first address line 154 and carried by the insulating substrate 150. An isolation device 158, preferably a p-i-n diode, is formed on a region of the first address line 154. A silicon dioxide layer 160, or equivalent insulator as previously disclosed, surrounds the diode 158 and covers the first address line 154 except in a region or via 162. A metal deposit 164 extends through the via 162 and is in contact with the isolation device 158. The metal deposit 164 couples the isolation device 158 to the pixel electrode 152.

A second isolation device 166, also preferably a p-i-n diode, is formed on a region of the pixel electrode 152. An insulating layer 168, such as silicon dioxide, surrounds and covers the isolation device 166 except in a region or via 170. A metal deposit 172 extends through the via 170 to contact the isolation device 166. The second address line 156 is preferably formed during the same processing step and at the same time as the metal deposit 172. To simultaneously form the second address line 156 and metal deposit 172, a layer of metal can be deposited over the insulating layer 168. The metal layer is then etched away in a conventional fashion to form the deposit 172 and the second address line 156. Alternately, the second address line 156 could be formed before or after the metal deposit 172. The metal deposit 172 couples the isolation device 166 between the pixel electrode 152 and the second address line 156. The second address line 156 is deposited on a region of the insulating layer 168. The equivalent circuit of Figure 3 applies to the liquid crystal display 140 of Figure 8.

The address lines 154, 156 are formed with no crossovers as were the address lines 16, 26. The address lines 154, 156 are each coupled to the pixel electrode 152. The subassembly 142 has the same benefits as does the pixel 10 of Figure 2 because of the noncrossing address lines.

Figure 9 illustrates a first step in practicing a method embodying the present invention. As illustrated in Figure 9 on the substrate 150, is formed a multilayer, 180 through 190, structure. The layer 180 is a deposited layer of conductive indium tin oxide which is also transparent. The layer 182 is a deposited layer of conductive metal such as aluminum, molybdenum, or a molybdenum tantalum alloy. Alternately, chromium, tantalum, tungsten, palladium, or platinum may be used. The metal layer 182 is deposited as previously described. Overlying the metal layer 182 is a first doped semiconductor layer 184. The doped layer 184 is a deposited amorphous semiconductor layer including a p-type or n-type dopant formed as an amorphous silicon alloy previously described. The layer 186 overlying the layer 184 is an intrinsic layer of amorphous silicon alloy. The layer 188 overlying the intrinsic layer 186 is a layer of doped amorphous silicon alloy which is opposite in conductivity as compared to the doped layer 184.

The layers 184 through 188 will ultimately be configured to form the isolation diodes 158 and 166. The layers 184 through 188 can be deposited by glow discharge deposition. As previously mentioned and as disclosed in United States Patent No. 4,226,898, one advantage of the present method is that the layers 184 through 188 can be deposited in a continuously maintained partial vacuum. The deposition process can include the glow discharge decomposition of at least silane gas. Hydrogen and/or fluorine can be mixed with the silane gas prior to the deposition. Alternately, silicon tetrafluoride can be used. Hydrogen can also be added to the silicon tetrafluoride prior to deposition. Overlying the doped layer 188 is another metal layer 190 of the type previously described.

In the second step in practicing the method of the present invention, and as illustrated in Figure 10, portions of the metal layer 190 are removed from the amorphous silicon alloy layer 188 by means of standard photolithographic techniques and etching except in selected regions 158a and 166a. The metal regions 158a and 166a may typically be on the order of 20 microns to 50 microns on a side.

One advantage of the method of the present invention lies in the fact that the metal regions 158a and 166a may now be used as masks for the purpose of selectively etching away the amorphous silicon alloy layers 184 through 188. Etching may be accomplished by means of a plasma etch incorporating sulfur hexafluoride ($SF_6$) or carbon tetrafluoride ($CF_4$), for example.

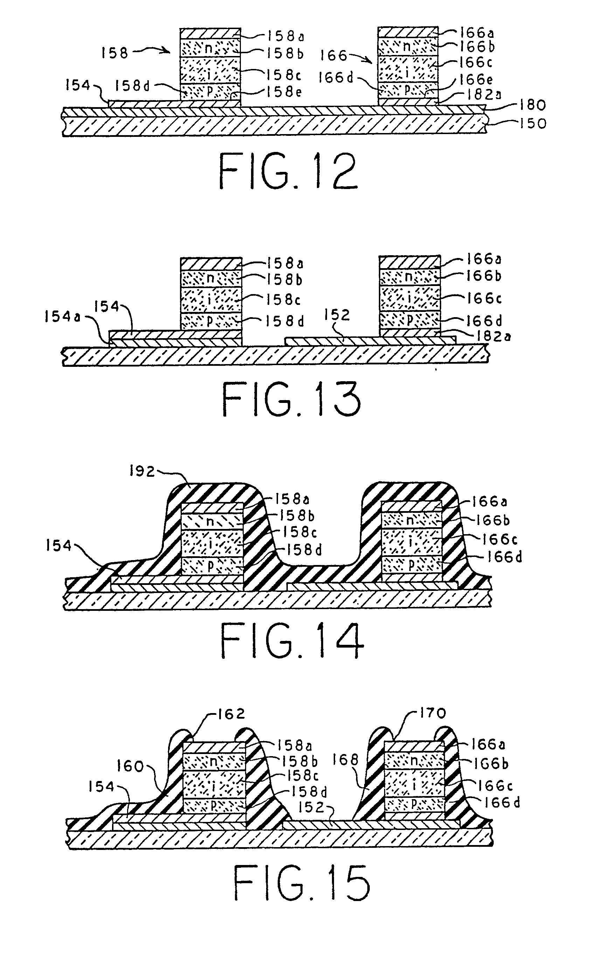

In the next step of the method of the present invention, as illustrated in Figure 11, the metal regions 158a and 166a have formed masks such that the amorphous silicon alloy layers 184 through 188 have been etched away from the metal layer 182 everywhere except beneath the masks 158a and 166a. One of the remaining amorphous silicon alloy columns including n-doped region 158b intrinsic region 158c and p-doped region 158d forms a p-i-n diode which is the isolation device 158. Similarly, beneath the metal region 166a the n-doped amorphous silicon alloy region 166b the intrinsic region 166c and the oppositely doped amorphous silicon alloy region 166d form the isolation device 166.

A plasma etching process is disclosed in more detail in a United States Patent Application entitled "High Performance, Small Area Thin Film Transistor", US-A-4 620 208 and assigned to the assignee of the present invention.

After the plasma etch has been used to form the isolation devices 158 and 166 as shown in Figure 11, the results of the next step of the method of the present invention are illustrated in Figure 12. The metal layer 182 is etched away from the indium tin oxide layer 180 by means of conventional lithography and etching techniques so as to form the first address line 154 and a metal pad 182a. As can be seen from Figure 12 the isolation device 158 occupies a region 158e of the first address line 154. The isolation device 166 forms a mask and is positioned on a surface 166e of the metal pad 182a.

In the next step of the method of the present invention, as illustrated in Figure 13, the indium tin oxide layer 180 is etched away so as to form the pixel electrode 152 and a lower region 154a of the address line 154.

As illustrated in Figure 14, the structure of Figure 13 is next covered with a deposited insulator 192 such as silicon dioxide or silicon nitride or a polymide as discussed previously. The insulating layer 192 can then be etched away, as illustrated in Figure 15, in the next step of the method of the present invention so as to form the vias 162 and 170 as well as to expose the pixel electrode 152.

As can be seen in Figure 8, the metal deposit 164 connecting the isolation device 158 to the pixel electrode 152, the metal deposit 172 and the second address line 156 are then formed. The metal deposits 164, 172 and the second address line 156 can be formed by depositing a metal layer over the entire structure including the pixel electrode 152 and the insulating regions 160 and 168. The metal layer can then be etched away so as to leave the deposits 164, 172 and the second address line 156. The result of applying the steps of the method of the present invention to the multilayer structure 180 through 190 is the subassembly 142. The subassembly 142 can then be combined with the substrate 144 to form the pixel 140.

The method of the present invention can be used in connection with a continuous process system of the type disclosed in United States Patent No. 4,438,723, issued March 27, 1984. The method of the present invention can also be used with batch systems of the load-lock type. The method of the present invention can be used to form transmissive or reflective displays. For a reflective display, a mirror can be located adjacent an external surface 150a of the substrate 150 as indicated in Figure 8. Alternately, the pixel electrode 152 can be formed with a part of the metal layer 182 thereon. For a transmissive display, the subassembly 142 can be formed as shown in Figure 8.

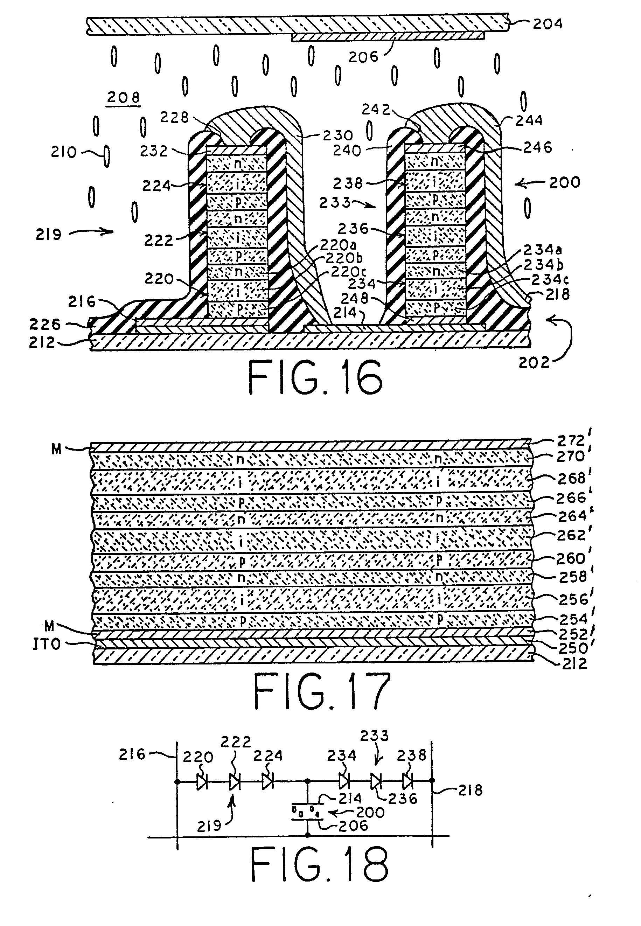

Yet another embodiment of the present invention is illustrated in Figure 16. In Figure 16 a pixel 200 of a display includes a subassembly 202 along with a substrate 204 spaced apart therefrom. Formed on the substrate 204 is an electrode 206 which can be transparent indium tin oxide. A region 208 between the substrate 204, the electrode 206 and subassembly 202 is filled with a light influencing material such as, for example, nematic conventional liquid crystal material 210.

The subassembly 202 is formed with a substrate 212 which, as in the case of the substrate 204, can be a transparent insulating material such as glass. On the substrate 212 is formed a transparent indium tin oxide electrode 214. Also formed on the substrate 212 is a first address line 216. A second address line 218 insulated from the first address line 216 is also carried by the substrate 212.

Formed on a region of the first address line 216 is an isolation device 219 including, for example, three isolation diodes 220 through 224. Each of the isolation diodes 220 through 224 is a p-i-n type diode corresponding to layers 220a through 220c of the diode 220. The isolation diodes 220 through 224 can be formed of amorphous silicon alloy as discussed previously. The diodes 220 through 224 form a series combination which will support a greater reverse bias voltage, when the diodes 220 through 224 are reverse biased, than is the case with the single diode isolation devices 158, 166 of the subassembly 142. While for exemplary purposes three series coupled diodes 220 through 224 are illustrated in Figure 16, it will be understood that any number of diodes could be used so as to achieve the desired reverse bias voltage rating.

A layer of insulating material 226 of silicon dioxide, silicon nitride or a polymide as discussed previously surrounds the isolation diodes 220 through 224 except at an opening or via 228. A metal deposit 230 electrically connects an upper metal layer 232 of the isolation device 219 to the transparent indium tin oxide electrode 214. The layer of metal 232 formed on the cathode end of the isolation diode 224 provides for improved conductivity between the diode stack 220 through 224 and the metallic deposit 230.

A second isolation device 233 including p-i-n diodes 234 through 238 is formed of deposited amorphous silicon alloy on a region of the electrode 214. The isolation devices 234 through 238 each include three regions corresponding to the regions 234a, 234b and 234c of the diode 234. The diodes 234 through 238 are connected in series as are the diodes 220 through 224. An insulating layer 240 surrounds the isolation diodes 234 through 238 except for a via or opening 242. A metal deposit 244 couples the second isolation device 233 to the second address line 218 through the via 242. Metal layers 246 and 248 at each end of the series connected diodes 234 through 238 provide for improved conductivity between the metal deposit 244 and the cathode of the diode 238 as well as the electrode 214 and the anode 234c of the diode 234.

The structure of the pixel 200 of Figure 16 can be formed by a method analogous to that disclosed previously. Figure 17 illustrates a multilayer, 250' through 272', structure formed on the substrate 212 out of which the subassembly 202 is formed. A layer 250' of a transparent conductor, such as indium tin oxide, is first deposited on the substrate 212. A metal layer 252' is then deposited over the conducting layer 250'. The metal layer may be formed, as discussed previously, out of aluminum, molybdenum or a molybdenum tantalum alloy. Additionally, chromium, tantalum, tungsten palladium or platinum may be used. A first doped semiconductor layer 254' having p-type doping is then deposited over the metal layer 252'. A substantially intrinsic semiconductor layer 256' is then deposited over the first doped layer 254'. A second doped semiconductor layer 258', having n-type doping, is deposited over the intrinsic layer 256'. A third doped semiconductor layer 260', having p-type doping, is formed over the second doped layer 258'. Another substantially intrinsic semiconductor layer 262' is formed over the p-doped layer 260'. A fourth doped semiconductor layer 264', having n-type doping, is formed over the intrinsic layer 262'. A first additional doped semiconductor layer 266', having p-type doping, is formed over the n-doped semiconductor layer 264'. An additional substantially intrinsic semiconductor layer 268' is formed over the first additional doped layer 266'. A second additional doped semiconductor layer 270', having n-type doping, is formed over the substantially intrinsic semiconductor layer 268'. A metal layer 272' is formed over the second additional n-type doped semiconductor layer 270'. The amorphous silicon alloy layers 254' through 270' can be deposited as discussed previously in a continuously maintained partial vacuum.

While three sets of doped layers 254' through 258', 260' through 264' and 266' through 270', have been illustrated in the structure of Figure 17, it will be understood that any number of sets of semiconductor layers could be deposited. The number of sets of semiconductor layers to be deposited depends on the number of series connected diodes to be formed in the subassembly 202.

With respect to Figure 17, the next step of the method of the present invention involves removing regions of the second metal layer 272' so as to form the metal regions 232 and 246. The metal regions 232 and 246 define the location of each of the isolation devices to be ultimately formed. In the next step of the present method, portions of the amorphous semiconductor layers 254' through 270' are removed as discussed previously while using the metal regions 232 and 246 as masks to form the isolation devices 220 through 224 and 234 through 238. Regions of the metal layer 252' are then etched away as disclosed previously to form the first address line 216 and the metal conductor layer 248. Regions of the transparent conductive layer 250' are then removed so as to form the pixel electrode 214. The insulating layers 226 and 240 are then deposited, and the vias 228 and 242 are formed. The metal deposits 230 and 244 and second address line 218 are then formed to complete the subassembly 202.

Figure 18 illustrates an equivalent circuit of the pixel 200. The address lines 216 and 218 are illustrated in Figure 18 connected to the electrode 214 through the series coupled diodes 220 through 224 and 234 through 238. By selecting the number of series connected diodes, the magnitude of the reverse bias voltage that can be applied across the diodes such as 220-224 can be increased.

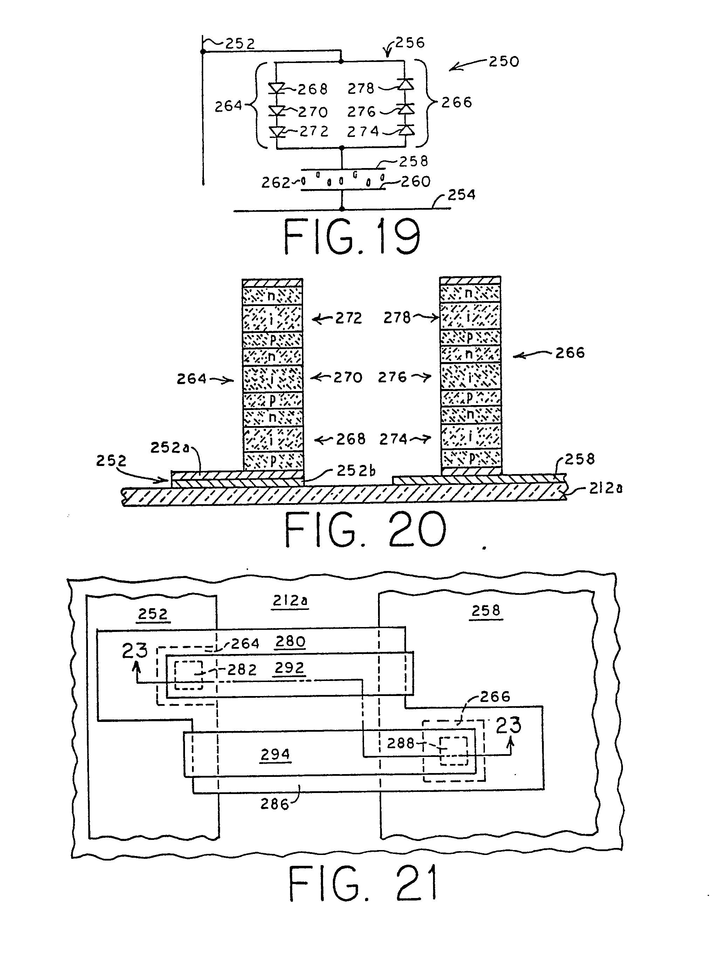

Figure 19 is a schematic of yet another embodiment of the present invention. In Figure 19 a pixel 250 is illustrated having address lines 252 and 254. A diode ring 256 couples the address line 252 to a pixel electrode 258. A second spaced apart pixel electrode 260 is coupled to the second address line 254. Between the electrodes 258 and 260 is a light influencing material 262. The diode ring 256 is formed of first and second parallel coupled isolation structures 264 and 266. The isolation structure 264 is formed of a plurality of three series coupled diodes 268 through 272. The isolation structure 266 is similarly formed of a plurality of three series coupled diodes 274 through 278. The diodes 268 through 272 are parallel coupled with reverse polarity or in reverse relation to the diodes 274 through 278. It will be understood that any number of diodes could be incorporated into the isolation structures 264 and 266. The schematic of Figure 7 is a variation of Figure 19 wherein the isolation structures 264 and 266 include only one diode.

The method discussed in connection with Figures 8 through 18 may be used advantageously to form a pixel such as 250 having a diode ring 256 as illustrated in Figure 19. Figure 20 illustrates one of the steps of processing the multilayer structure of Figure 17 so as to form the pixel 250. Figure 20 illustrates the multilayer structure of Figure 17 at a point where the p-i-n layers such as 254 through 270 of Figure 17 have been etched to form the isolation structures 264 and 266. As can be seen from Figure 20 the isolation structure 264 is formed on the address line 252 using the method previously discussed with respect to forming the isolation devices 158 and 219 of Figures 8 and 16 respectively. The address line 252 is formed of a metal layer 252a which overlies a layer of indium tin oxide 252b. The isolation structure 266 is formed on a region of the indium tin oxide pixel electrode 258 analogously to the way the isolation structures 166, 233 of Figures 8 and 16 were formed. The address line 252 and the pixel electrode 258 are formed on a glass substrate 212a.

It will be understood that while Figure 20 illustrates isolation structures 264 and 266 each having a plurality of three series coupled diodes 268 through 272 and 274 through 278 the structure of Figure 20 could be formed with isolation structures each having only one diode corresponding to the schematic of Figure 7. Each of the diodes 268 through 278 of Figure 20, in keeping with the previous discussion of Figures 8 through 18 is formed with a p-i-n structure.

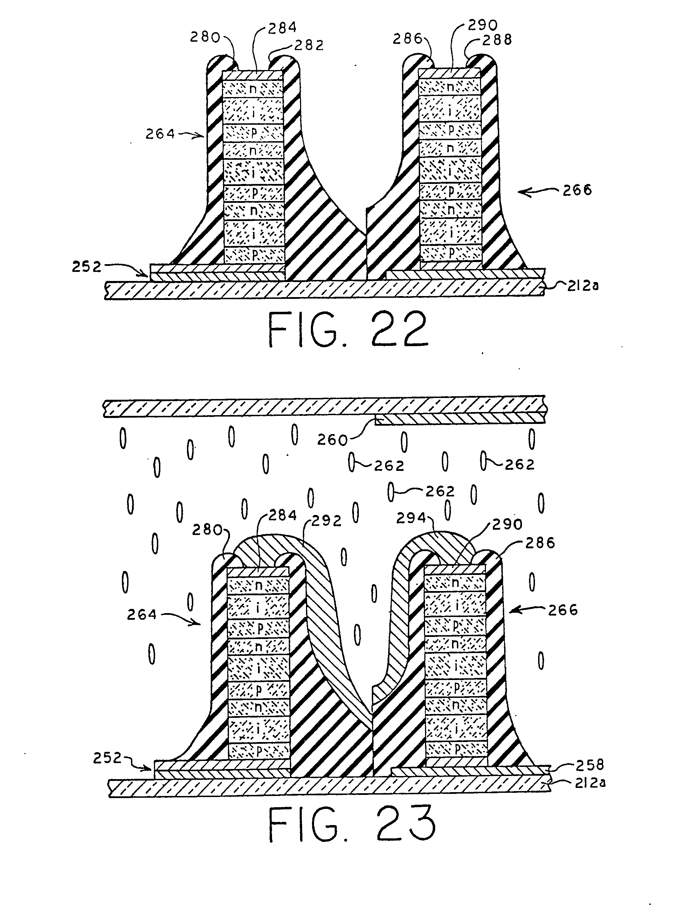

The structure of Figure 20 is however substantially different from either Figure 12 or Figure 16 in that the isolation devices 264 and 266 are purposely offset with respect to one another. This offset can be seen in Figure 21. Figure 21 is a fragmentary top view corresponding to the completed structure of Figure 19 exclusive of the electrode 260 and the address line 254. As can be seen in Figure 21 the isolation structure 264 which is positioned on the address line 252 is laterally offset from the isolation structure 266 which is positioned on the pixel electrode 258. As a result of this lateral offset the diode ring 256 may be formed with minimal additional deposition and/or etching operations.

Figure 22 illustrates a partially complete pixel 250 corresponding to a sectional view taken along line 23-23' of Figure 21. With respect to Figure 22, a layer 280 of insulating material such as silicon dioxide has been deposited around the isolation structure 264. A via 282 has been formed adjacent a top or cathode end 284 of the isolation structure 264. Similarly, an insulating layer 286 has been deposited around the isolation structure 266. A via 288 has been formed adjacent an upper cathode end 290 thereof. Figure 21 also illustrates the insulating layers 280 and 286 which are adjacent one another and which extend between the address line 252 and the pixel electrode 258.

In a further step as illustrated in Figure 23 a sectional view taken along line 23-23' of Figure 21 a metal layer 292 has been deposited coupling the isolation structure 264, at the cathode end 284 thereof to the display electrode 258. A second metal layer 294 has been deposited as illustrated in Figure 23 coupling the cathode end 290 of the isolation structure 266 to the address line 252. As can be seen from Figure 21 the metal layers 292, 294 are deposited approximately parallel with one another but are insulated from each other by the insulating layer 280, 286. Again, with reference to Figure 23, the opposing display electrode 260 is shown spaced apart from the electrode 258 with the light influencing material 262 therebetween. The structure of Figure 23 formed on the sub-

strate 212a, including the isolation structures 264, 266, can also be regarded as a subassembly for a display pixel.

It will be understood that the semiconductor structures of Figures 8, 16 and 23 have not been drawn to scale with respect to the opposing pixel electrodes. It should also be understood that the opposing pixel electrodes, such as 146, 206 and 260 would be spaced an appropriate distance from the respective semiconductor structures such as the diodes 158, 166 of Figure 8; 219, 233 of Figure 16 and 264, 266 of Figure 23. While the isolation devices, such as diode 234 have been disclosed as p-i-n diodes, they could also have been formed as Schottky barrier diodes.

An advantage of the present method can be improved manufacturing yields. Since the vertically arranged isolation diodes are series connected, a short in any one of them will not render the pixel inoperable due to the existence of remaining series coupled, operative isolation diodes.

As can be appreciated by those skilled in the art, the present invention can be practiced otherwise as specifically disclosed herein. For example, doping of the diodes can be reversed and the diodes of the displays can be formed from deposited semiconductor materials other than amorphous semiconductor alloys. Alternately, the diodes can be formed from polycrystalline semiconductor alloys. Furthermore the amorphous semiconductor alloy material diodes can be formed from other material configurations than the p-i-n configuration described herein. For example, configurations such as p-π-n, p-v-n, p-n, etc are possible where π and v refer to lightly doped p and n-type semiconductor material respectively.

## Claims

1. A two dimensional display (140; 200; 250) formed on an insulative substrate (150, 212), which display includes first and second address lines (154, 156; 216, 218; 252, 254), and first and second pixel electrodes (146, 152; 206, 214; 258, 260), with light influencing material (148; 210; 262) disposed therebetween and first and second isolation diodes (158, 166; 219, 233; 264, 266) in series between an address line (154, 156; 216, 218; 252, 254) and a first pixel electrode (152; 214; 258), wherein

the first pixel electrode (152; 214; 258) and the first address line (154; 216; 252) are formed on the insulative substrate (150; 212);

the second pixel electrode (146; 206; 260) is spaced from and substantially parallel to said first pixel electrode (152; 214; 258);

the first and second isolation diodes (158, 166; 219, 233; 264, 266) are each electrically connected between the address lines (154, 156; 216, 218; 252, 254) and the pixel electrodes (146, 152; 206, 214; 258, 260);

each of said isolation diodes (158, 166; 219, 233; 264, 266) is formed of a thin film layer of an amorphous silicon alloy; characterized in that the first isolation diode (158; 219; 264) is formed on the first address line (154; 216; 264), and coupled on the side opposite said first address line (154; 216; 264) to said first pixel electrode (152; 214; 258); and

the second isolation diode (166; 233; 266) is formed on the first pixel electrode (152; 214; 258) in electrical connection with the second address line (156; 218; 254) on the side opposite said first pixel electrode (152; 214; 258).

2. Display as claimed in claim 1, characterized in that said amorphous silicon alloy includes hydrogen or fluorine.

3. Display as claimed in claim 1 or 2, characterized in that said diodes (158, 166) include a first doped semiconductor region (184, 254'), an intrinsic semiconductor region (186, 256') overlying said first doped region, and a second doped semiconductor region (188, 258') overlying said intrinsic region, said first and second doped semiconductor regions being opposite in conductivity.

4. Display as claimed in any of the preceding claims, characterized in that said pixel electrodes (146, 152; 206, 214; 258, 260) are formed from a transparent conductive material.

5. Display as claimed in claim 4, characterized in that said transparent conductive material is indium tin oxide.

6. Display as claimed in any of the preceding claims, characterized in that said first and second isolation diodes (158, 166; 219, 233; 264, 266) each comprises a plurality of series connected diodes.

7. Display as claimed in any of the preceding claims, characterized in that said light influencing material (148; 210, 262) is a nematic liquid crystal display material.

8. Display as claimed in claim 6 or 7, characterized in that vertically arrayed isolation devices (268, 270, 272, 274, 276, 278) of said first plurality and said second plurality of isolation diodes (264, 266) are series coupled and that said first plurality and said second plurality of isolation diodes (264, 266) will support a reverse bias voltage greater than a reverse bias voltage supportable by only one of said isolation diodes (264, 266).

9. Display as claimed in claim 6 or 7, characterized in that vertically arrayed isolation devices (220, 222, 224) of said first plurality of isolation diodes (264) are series coupled, with said first plurality of isolation devices displaying a forward biased voltage drop greater than a forward biased voltage drop displayed by only one of said isolation diodes and that said vertically arrayed isolation devices of said second plurality (234, 236, 238) are series coupled, with said second plurality of isolation diodes displaying a forward biased voltage drop greater than a forward biased voltage drop displayed by only one of said isolation diodes, and that said first and second plurality of isolation diodes (219, 233) are parallel coupled between said first address line (216) and said first pixel electrode (206).

10. Display as claimed in claim 9, characterized in that said first and second isolation diodes (219, 233) are parallel coupled in reverse relation with one of said isolation diodes being reverse biased when the other said isolation diode is forward biased.

11. Display as claimed in any of the preceding claims, characterized in that said first and second address lines (154, 156) do not intersect.

12. Display as claimed in any of the preceding claims formed as a subassembly for a display pixel (250), characterized in that a diode ring (256) is coupled by means for electrical connection between an address line (252) and a pixel electrode (258) wherein said diode ring (256) includes at least first and second diodes (264, 266) parallel coupled with reverse polarity with said first diode (264) formed on a region of said address line (252) and said second diode (266) formed on a region of said pixel electrode (258).

13. Display subassembly according to claim 12, characterized in that a third diode is formed on said first isolation diode (264) and that a fourth diode is formed on said second isolation diode (266); with said third diode series coupled to said first diode, said first isolation diode (264) and said third diode being vertically arrayed with respect to said substrate (212a), and with said second diode series coupled to said fourth diode, said second isolation diode (266) and fourth diode being vertically arrayed with respect to said substrate (212a).

14. Display subassembly as claimed in claim 12 or 13, characterized in that each of said isolation diodes (219, 233) includes a selectively shaped deposited metal pad (246; 248) affixed to an end thereof to provide improved coupling thereto.

15. Display subassembly as claimed in any of claims 12 - 14, characterized in that each diode (220, 222, 224, 234, 236, 238) is a Schottky barrier diode.

16. Method of making a display or a subassembly thereof as claimed in any of the preceding claims, characterized by the steps of:

(A) providing an insulative substrate;

(B) depositing a conductive layer over said substrate;

(C) depositing a first metal layer over said conductive material;

(D) depositing first and second doped semiconductor layers over said metal layer, said second doped layer being opposite in conductivity with respect to said first doped layer;

(E) depositing a second metal layer over said second doped semiconductor layer;

(F) removing portions of said second metal layer to leave discrete portions of said second metal remaining to define the location of said diode isolation device;

(G) removing portions of said semiconductor layers while using said second metal discrete portions as a mask to form said diode isolation devices;

(H) removing portions of said first metal layer to form a first address lead with one of said diode isolation devices thereon;

(I) removing portions of said conductive material to form a first pixel electrode with the other said diode isolation device thereon;

(J) forming an interconnect lead to couple said one diode isolation device on the side thereof opposite said first address lead to said first pixel electrode;

(K) forming a second address lead insulated from said first address lead and coupled to said other diode isolation device on the side thereof opposite said first pixel electrode;

(L) forming a second pixel electrode spaced from and substantially parallel to said first pixel electrode;

(M) applying light influencing material between said pixel electrodes.

17. Method as claimed in claim 16, characterized by steps (D), (E) and (F) being performed in succession in a partial vacuum and further characterized by said partial vacuum is continuously maintained during the performance of steps (D), (E) and (F).

18. Method as claimed in claim 16 or 17, further characterized by said semiconductor layers being deposited by vapor deposition; said vapor deposition being a glow discharge decomposition deposition of at least silane gas ($SiH_4$), with hydrogen gas or fluorine gas being mixed with said silane gas prior to said deposition or of at least silicon tetrafluoride gas ($SiF_4$) with hydrogen gas being mixed with said $SiF_4$ gas prior to said deposition.

19. Method as claimed in any of claims 16 - 18, further characterized by step (I) which includes removing said portions of said semiconductor layers in one continuous process and includes etching or plasma etching and/or by steps (D), (E) and (F) are performed in succession in a partial vacuum, said vacuum being continuously maintained during the performance of said steps.

20. Method as claimed in claim 19, further characterized by, after step (F), the steps of:

(F1) depositing at least a first additional doped semiconductor layer over said second doped layer, said first additional doped layer being opposite in conductivity with respect to said second doped layer;

(F2) depositing at least an additional substantially intrinsic semiconductor layer over said first additional doped layer;

(F3) depositing at least a second additional doped semiconductor layer over said additional intrinsic layer, said second additional doped layer being opposite in conductivity with respect to said first additional doped layer; and

wherein step (G) includes depositing said second metal layer over said second additional doped semiconductor layer.

## Patentansprüche

1. Auf einem Isoliersubstrat (150, 212) gebildete zweidimensionale Anzeige (140; 200; 250) mit einer ersten und einer zweiten Adreßleitung (154, 156; 216, 218; 252, 254) und mit einer ersten und einer zweiten Pixelelektrode (146, 152; 206, 214; 258, 260), zwischen denen Lichtbeeinflussungsmaterial (148; 210; 262) angeordnet ist, und mit einer ersten und einer zweiten Trenndiode (158, 166; 219, 233; 264, 266) in Reihenkopplung zwischen einer Adreßleitung (154, 156; 216, 218; 252, 254) und einer ersten Pixelelektrode (152; 214; 258), wobei

die erste pixelelektrode (152; 214; 258) und die erste Adreßleitung (154; 216; 252) auf dem Isoliersubstrat (150; 212) gebildet sind;

die zweite Pixelelektrode (146; 206; 260) von der ersten Pixelelektrode (152; 214; 258) beabstandet und im wesentlichen parallel dazu ist;

die erste und die zweite Trenndiode (158, 166; 219, 233; 264, 266) jeweils elektrisch zwischen die Adreßleitungen (154, 156; 216, 218; 252, 254) und die Pixelelektroden (146, 152; 206, 214; 258, 260) geschaltet sind;

jede Trenndiode (158, 166; 219, 233; 264, 266) aus einem Dünnfilm einer amorphen Siliciumlegierung gebildet ist; dadurch gekennzeichnet,

daß die erste Trenndiode (158; 219; 264) auf der ersten Adreßleitung (154; 216; 264) gebildet und auf der der ersten Adreßleitung (154; 216; 264) entgegengesetzten Seite mit der ersten Pixelelektrode (152; 214; 258) gekoppelt ist; und

daß die zweite Trenndiode (166; 233; 266) auf der ersten Pixelelektrode (152; 214; 258) in elektrischer Verbindung mit der zweiten Adreßleitung (156; 218; 254) auf der der ersten Pixelelektrode (152; 214; 258) entgegengesetzten Seite gebildet ist.

2. Anzeige nach Anspruch 1, dadurch gekennzeichnet, daß die amorphe Siliciumlegierung Wasserstoff oder Fluor enthält.

3. Anzeige nach einem der Ansprüche 1 oder 2, dadurch gekennzeichnet, daß die Dioden (158, 166) eine erste dotierte Halbleiterzone (184, 254'), eine eigenleitende Halbleiterzone (186, 256') über der ersten dotierten Zone sowie eine zweite dotierte Halbleiterzone (188, 258') über der eigenleitenden Zone umfassen, wobei die erste und die zweite dotierte Halbleiterzone vom entgegengesetzten Leitfähigkeitstyp sind.

4. Anzeige nach einem der vorhergehenden Ansprüche, dadurch gekennzeichnet, daß die Pixelelektroden (146, 152; 206, 214; 258, 260) aus einem lichtdurchlässigen Leitermaterial gebildet sind.

5. Anzeige nach Anspruch 4, dadurch gekennzeichnet, daß das lichtdurchlässige Leitermaterial Indiumzinnoxid ist.

6. Anzeige nach einem der vorhergehenden Ansprüche, dadurch gekennzeichnet, daß die erste und die zweite Trenndiode (158, 166; 219, 233; 264, 266) jeweils aus einer Mehrzahl von reihengekoppelten Dioden bestehen.

7. Anzeige nach einem der vorhergehenden Ansprüche, dadurch gekennzeichnet, daß das Lichtbeeinflussungsmaterial (148; 210; 262) ein nematisches Flüssigkristallanzeigematerial ist.

8. Anzeige nach einem der Ansprüche 6 oder 7, dadurch gekennzeichnet, daß vertikal angeordnete Trennvorrichtungen (268, 270, 272, 274, 276, 278) der ersten Mehrzahl und der zweiten Mehrzahl von Trenndioden (264, 266) reihengekoppelt sind und daß die erste und die zweite Mehrzahl Trenndioden (264, 266) eine größere Rückwärts-Sperrspannung als nur eine der Trenndioden (264, 266) aufnehmen können.

9. Anzeige nach einem der Ansprüche 6 oder 7, dadurch gekennzeichnet, daß vertikal angeordnete Trennvorrichtungen (220, 222, 224) der ersten Mehrzahl Trenndioden (264) reihengekoppelt sind, wobei die erste Mehrzahl Trennvorrichtungen einen größeren Durchlaßspannungsabfall als nur eine der Trenndioden aufweist, und daß die vertikal angeordneten Trennvorrichtungen der zweiten Mehrzahl (234, 236, 238) reihengekoppelt sind, wobei diese zweite Mehrzahl Trenndioden einen größeren Durchlaßspannungsabfall als nur eine der Trenndioden aufweist, und daß die erste und die zweite Mehrzahl Trenndioden (219, 233) parallel zwischen die erste Adreßleitung (216) und die erste Pixelelektrode (206) gekoppelt sind.

10. Anzeige nach Anspruch 9, dadurch gekennzeichnet, daß die erste und die zweite Trenndiode (219, 233) in Umkehrbeziehung parallelgekoppelt sind, wobei die eine Trenndiode in Sperrichtung vorgespannt ist, wenn die andere Trenndiode in Durchlaßrichtung vorgespannt ist.

11. Anzeige nach einem der vorhergehenden Ansprüche, dadurch gekennzeichnet, daß die erste und die zweite Adreßleitung (154, 156) einander nicht überkreuzen.

12. Anzeige nach einem der vorhergehenden Ansprüche in Form einer Untereinheit für ein Anzeige-Pixel (250), dadurch gekennzeichnet, daß ein Diodenring (256) durch elektrische Verbindungsmittel zwischen eine Adreßleitung (252) und eine Pixel-Elektrode (258) gekoppelt ist, wobei der Diodenring (256) wenigstens eine erste und eine zweite Diode (264, 266) aufweist, die mit entgegengesetzter Polarität parallelgekoppelt sind, wobei die erste Diode (254) auf einem Bereich der Adreßleitung (252) und die zweite Diode (266) auf einem Bereich der Pixelelektrode (258) gebildet ist.

13. Anzeige-Untereinheit nach Anspruch 12, dadurch gekennzeichnet, daß auf der ersten Trenndiode (264) eine dritte Diode und auf der zweiten Trenndiode (266) eine vierte Diode gebildet ist; wobei die dritte Diode mit der ersten Diode reihengekoppelt ist, die erste Trenndiode (264) und die dritte Diode in bezug auf das Substrat (212a) vertikal angeordnet sind, und die zweite Diode mit der vierten Diode reihengekoppelt ist und die zweite Trenndiode (266) und die vierte Diode in bezug auf das Substrat (212a) vertikal angeordnet sind.

14. Anzeige-Untereinheit nach einem der Ansprüche 12 oder 13, dadurch gekennzeichnet, daß jede Trenndiode (219, 233) einen selektiv geformten abgeschiedenen Metallfleck (246; 248) aufweist, der an einem Ende der Trenndiode fixiert ist, um deren Kopplung zu verbessern.

15. Anzeige-Untereinheit nach einem der Ansprüche 12-14, dadurch gekennzeichnet, daß jede Diode (220, 222, 224, 234, 236, 238) eine Schottky-Sperrschichtdiode ist.

16. Verfahren zur Herstellung einer Anzeige oder einer Anzeige-Untereinheit nach einem der vorhergehenden Ansprüche, gekennzeichnet durch folgende Schritte:

(A) Bereitstellen eines Isoliersubstrats;

(B) Abscheiden einer Leiterschicht auf dem Substrat;

(C) Abscheiden einer ersten Metallschicht auf dem Leitermaterial;

(D) Abscheiden einer ersten und einer zweiten dotierten Halbleiterschicht auf der Metallschicht, wobei die zweite dotierte Schicht entgegengesetzte Leitfähigkeit wie die erste dotierte Schicht hat;

(E) Abscheiden einer zweiten Metallschicht auf der zweiten dotierten Halbleiterschicht;

(F) Abtragen von Teilen der zweiten Metallschicht, so daß diskrete Teile derselben verbleiben, die den Ort der Dioden-Trennvorrichtung definieren;

(G) Abtragen von Teile der Halbleiterschichten unter Verwendung der diskreten Teile der zweiten Metallschicht als Maske zur Bildung der Dioden-Trennvorrichtungen;

(H) Abtragen von Teilen der ersten Metallschicht unter Bildung einer ersten Adreßleitung, auf der sich die eine Dioden-Trennvorrichtung befindet;

(I) Abtragen von Teilen des Leitermaterials unter Bildung einer ersten Pixelelektrode, auf der sich die andere Dioden-Trennvorrichtung befindet;

(J) Ausbilden einer Zwischenleitung zur Kopplung der einen Dioden-Trennvorrichtung auf der der ersten Adreßleitung entgegengesetzten Seite mit der ersten Pixelelektrode;

(K) Ausbilden einer zweiten Adreßleitung, die gegenüber der ersten Adreßleitung isoliert ist und mit der anderen Dioden-Trennvorrichtung auf ihrer der ersten Pixelelektrode gegenüberliegenden Seite gekoppelt ist;

(L) Ausbilden einer zweiten Pixelelektrode, die von der ersten Pixelelektrode beabstandet und dazu im wesentlichen parallel ist;

(M) Anbringen von Lichtbeeinflussungsmaterial zwischen den Pixelelektroden.

17. Verfahren nach Anspruch 16, dadurch gekennzeichnet, daß die Schritte (D), (E) und (F) nacheinander in einem Teilvakuum durchgeführt werden, und daß das Teilvakuum während der Durchführung der Schritte (D), (E) und (F) ständig unterhalten wird.

18. Verfahren nach einem der Ansprüche 16 oder 17, dadurch gekennzeichnet, daß die Halbleiterschichten durch Aufdampfen abgeschieden werden; daß das Aufdampfen eine Glimmentladungs-Zersetzung von wenigstens Silan (SiH₄), wobei Wasserstoff oder Fluor mit dem Silan vor dem Aufdampfen vermischt wird, oder von wenigstens Siliciumtetrafluorid (SiF₄) ist, wobei vor dem Aufdampfen Wasserstoff mit dem SiF₄ vermischt wird.

19. Verfahren nach einem der Ansprüche 16-18, dadurch gekennzeichnet, daß Schritt (I) das Abtragen der Teile der Halbleiterschichten in einem kontinuierlichen Vorgang sowie Ätzen oder Plasmaätzen umfaßt, und/oder daß die Schritte (D), (E) und (F) aufeinanderfolgend in einem Teilvakuum durchgeführt werden, das während der Durchführung dieser Schritte ständig unterhalten wird.

20. Verfahren nach Anspruch 19, gekennzeichnet durch die auf Schritt (F) folgenden Schritte:

(F1) Abscheiden wenigstens einer ersten zusätzlichen dotierten Halbleiterschicht auf der zweiten dotierten Schicht, wobei die erste zusätzliche dotierte Schicht entgegengesetzte Leitfähigkeit wie die zweite dotierte Schicht hat;

(F2) Abscheiden wenigstens einer zusätzlichen, im wesentlichen eigenleitenden Halbleiterschicht auf der ersten zusätzlichen dotierten Schicht;

(F3) Abscheiden wenigstens einer zweiten zusätzlichen dotierten Halbleiterschicht auf der zusätzlichen eigenleitenden Schicht, wobei die zweite zusätzliche dotierte Schicht entgegengesetzte Leitfähigkeit wie die erste zusätzliche dotierte Schicht hat; und

wobei Schritt (G) das Abscheiden der zweiten Metallschicht auf der zweiten zusätzlichen dotierten Halbleiterschicht umfaßt.

**Revendications**

1. Affichage à deux dimensions (140; 200; 250) réalisé sur un substrat isolant (150, 212), affichage qui comprend des première et seconde lignes d'adressage (154, 156; 216, 218; 252, 254), et des première et seconde électrodes de pixel (146, 152; 206, 214; 258, 260), avec, entre celles-ci, un matériau à influence sur la lumière (148; 210; 262) et des première et seconde diodes d'isolation (158, 166; 219, 233; 264, 266) montées en série entre une ligne d'adressage (154, 156; 216, 218; 252, 254) et une première électrode de pixel (152; 214; 258), dans lequel

la première électrode de pixel (152; 214; 258) et la première ligne d'adressage (154; 216; 252) sont réalisées sur le substrat isolant (150; 212);

la seconde électrode de pixel (146; 206; 260) est espacée d'une certaine distance de la première électrode de pixel (152; 214; 258), parallèlement à celle-ci;

les première et seconde diodes d'isolation (158, 166; 219, 233; 264, 266) sont connectées chacune électriquement entre les lignes d'adressage (154, 156; 216, 218; 252, 254) et les électrodes de pixel (146, 152; 206, 214; 258, 260);

chacune des diodes d'isolation (158, 166; 219, 233; 264, 266), est constituée d'une

couche mince d'alliage de silicium amorphe; caractérisé en ce que

la première diode d'isolation (158; 219; 264), est réalisée sur la première ligne d'adressage (154; 216; 264), et est raccordée du côté opposé à ladite première ligne d'adressage (154; 216; 264) à ladite première électrode de pixel (152; 214; 258); et

la seconde diode d'isolation (166; 233; 266) est réalisée sur la première électrode de pixel (152; 214; 258) en contact électrique avec la seconde ligne d'adresssage (156; 218; 254) du côté opposé à la dite première électrode de pixel (152; 214; 258).

2. Affichage selon la revendication 1, caractérisé en ce que ledit alliage de silicium amorphe comprend de l'hydrogène ou du fluor.

3. Affichage selon la revendication 1 ou 2, caractérisé en ce que lesdites diodes (158, 166) comprennent une première région semi-conductrice dopée (184, 254'), une région semi-conductrice intrinsèque (186, 256') recouvrant ladite première région dopée et une seconde région semi-conductrice dopée (188, 258') recouvrant la dite région intrinsèque, les première et seconde régions semi-conductrices dopées étant de conductivités opposées.

4. Affichage selon l'une quelconque des revendications précédentes, caractérisé en ce que lesdites électrodes de pixel (146, 152; 206, 214; 258, 260) sont constituées de matériau conducteur transparent.

5. Affichage selon la revendication 4, caractérisé en ce que ledit matériau conducteur transparent est constitué d'oxyde d'étain d'indium.

6. Affichage selon l'une quelconque des revendications précédentes, caractérisé en ce que les première et seconde diodes d'isolation (158, 166; 219, 233; 264, 266) comprennent chacune une pluralité de diodes montées en série.

7. Affichage selon l'une quelconque des revendications précédentes, caractérisé en ce que ledit matériau à influence sur la lumière (148; 210, 262) est constitué de matériau d'affichage à cristaux liquides nématique.

8. Affichage selon la revendication 6 ou 7 caractérisé en ce que des dispositifs d'isolation disposés verticalement (268, 270, 272, 274, 276, 278) de ladite première pluralité et de ladite seconde pluralité de diodes d'isolation (264, 266) sont montés en série et en ce que ladite première pluralité et ladite seconde pluralité de diodes d'isolation (264, 266) supporteront une tension de polarisation inverse plus importante qu'une tension de polarisation inverse pouvant être supportée par une seule desdites diodes d'isolation (264, 266).

9. Affichage selon la revendication 6 ou 7 caractérisé en ce que les dispositifs d'isolation disposés verticalement (220, 222, 224) de ladite première pluralité de diodes d'isolation (264) sont montées en série, ladite première pluralité de dispositifs d'isolation présentant une chute de tension de polarisation en sens direct plus importante qu'une chute de tension de polarisation en sens direct présentée par une seule desdites diodes d'isolation et en ce que les dispositifs d'isolation disposés verticalement de ladite seconde pluralité (234, 236, 238) sont montés en série, ladite seconde pluralité de diodes d'isolation présentant une chute de tension de polarisation en sens direct plus importante qu'une chute de tension de polarisation en sens direct présentée par une seule des diodes d'isolation et en ce que lesdites première et seconde pluralités de diodes d'isolation (219, 233) sont montées en parallèle entre ladite première ligne d'adressage (216) et la dite première électrode de pixel (206).

10. Affichage selon la revendication 9, caractérisé en ce que les dites première et seconde diodes d'isolation (219, 233) sont montées en parallèle en relation inverse, une desdites diodes d'isolation étant polarisée en sens inverse lorsque l'autre desdites diodes d'isolation est polarisée en sens direct.

11. Affichage selon l'une quelconque des revendications précédentes, caractérisé en ce que lesdites première et seconde lignes d'adressage (154, 156) ne se coupent pas.

12. Affichage selon l'une quelconque des revendications précédentes réalisé sous forme de sous-ensemble d'un pixel d'affichage (250), caractérisé en ce qu'une couronne de diodes (256) est montée par des moyens de connection électrique entre une ligne d'adressage (252) et une électrode de pixel (258), ladite couronne de diodes (256) comprenant au moins des première et seconde diodes (264, 266) montées en parallèle selon une polarité inverse, la première diode (264) étant réalisée sur une région de la ligne d'adressage (252) tandis que la seconde diode (266) est réalisée sur une région de ladite électrode de pixel (258).

13. Sous-ensemble d'affichage selon la revendication 12, caractérisé en ce qu'une troisième diode est réalisée sur ladite première diode d'isolation (264) et une quatrième diode est réalisée sur ladite seconde diode d'isolation (266); la troisième diode étant montée en série avec la première diode, la dite première diode d'isolation (264) et ladite troisième diode étant disposées verticalement par rapport au substrat (212a), et ladite seconde diode étant montée en série avec ladite quatrième diode, la seconde diode d'isolation (266) et la quatrième diode étant disposées verticalement par rapport audit substrat (212a).

14. Sous-ensemble d'affichage selon la revendication 12 ou 13, caractérisé en ce que chacune desdites diodes d'isolation (219, 233) comprend une métallisation déposée de forme sélective (246; 248) solidaire d'une extrémité de celle-ci afin d'améliorer le couplage.

15. Sous-ensemble d'affichage selon l'une quelconque des revendications 12 à 14, caractérisé en ce que chaque diode (220, 222, 224, 234, 236, 238) est constituée d'une diode à barrière de Schottky.

16. Procédé de fabrication d'un affichage ou d'un sous-ensemble de celui-ci selon l'une quelconque des revendications précédentes, caractérisé par les étapes comprenant:

(A) prévision d'un substrat d'isolant;

(B) dépôt d'une couche conductrice sur ledit substrat;

(C) dépôt d'une première métallisation sur le matériau conducteur;

(D) dépôt d'une première et seconde couches semi-conductrices dopées sur ladite métallisation, ladite seconde couche dopée étant de conductivité opposée par rapport à ladite première couche dopée;

(E) dépôt d'une seconde métallisation sur ladite seconde couche conductrice dopée;

(F) élimination de certaines portions de ladite seconde métallisation afin de laisser subsister des portions discrètes de la seconde métallisation en vue de délimiter l'emplacement dudit dispositif d'isolation à diodes;

(G) élimination de certaines portions des couches semiconductrices tout en utilisant les portions discrètes de la seconde métallisation comme masque afin de réaliser lesdits dispositifs d'isolation à diode;

(H) élimination de certaines portions de la première métallisation afin de réaliser un premier conducteur d'adressage portant un des dispositifs d'isolation à diode;

(I) élimination de certaines portions du matériau conducteur afin de réaliser une première électrode de pixel portant l'autre dispositif d'isolation à diode;

(J) réalisation d'un conducteur d'interconnection pour raccorder un dispositif d'isolation à diode, du côté de celui-ci opposé audit premier conducteur d'adressage avec ladite première électrode de pixel;

(K) réalisation d'un second conducteur d'adressage isolé par rapport au premier conducteur d'adressage et raccordé avec l'autre dispositif d'isolation à diode du côté de celui-ci opposé à ladite première électrode de pixel;

(L) réalisation d'une seconde électrode de pixel espacée de ladite première électrode de pixel et sensiblement parallèlement à celle-ci;

(M) application de matériau à influence sur la lumière entre les électrodes de pixel.

17. Procédé selon la revendication 16, caractérisé par le fait que les étapes (D), (E) et (F) sont effectuées successivement sous un vide partiel et caractérisé en outre en ce que le vide partiel est maintenu en continu pendant le déroulement des étapes (D), (E) et F.

18. Procédé selon la revendication 16 ou 17, caractérisé en ce que les couches semi-conductrices sont déposées par métallisation sous vide; ladite métallisation sous vide étant un dépôt par décomposition sous décharge luminescente d'au moins du silane en phase gazeuse ($SiH_4$), de l'hydrogène en phase gazeuse ou, du fluor en phase gazeuse étant mélangé au silane en phase gazeuse avant le dépôt d'au moins du tétrafluorure de silicium en phase gazeuse ($SiF_4$), l'hydrogène en phase gazeuse étant mélangé au $SiF_4$ en phase gazeuse avant ledit dépôt.

19. Procédé selon l'une quelconque des revendications 16 à 18, caractérisé en ce que l'étape (I) consiste à éliminer lesdites portions des couches semi-conductrices selon un procédé continu et comprend la gravure ou la gravure au plasma et/ou en ce que les étapes (D), (E) et (F) sont effectuées successivement sous un vide partiel, ledit vide étant maintenu en continu pendant le déroulement desdites étapes.

20. Procédé selon la revendication 19, caractérisé, après l'étape (F), par des étapes qui comprennent:

(F1) dépôt d'au moins une première couche semi-conductrice dopée supplémentaire sur ladite seconde couche dopée, ladite première couche dopée supplémentaire étant de conductivité opposée par rapport à la dite seconde couche dopée;

(F2) dépôt d'au moins une couche semi-conductrice supplémentaire sensiblement intrinsèque sur ladite première couche dopée supplémentaire;

(F3) dépôt d'au moins une seconde couche semi-conductrice dopée supplémentaire sur ladite couche intrinsèque supplémentaire, ladite seconde couche dopée supplémentaire étant de conductivité opposée par rapport à ladite première couche dopée supplémentaire; et

dans lequel l'étape (G) comprend le dépôt de ladite seconde métallisation sur ladite seconde couche semi-conductrice dopée supplémentaire.

FIG.1

FIG. 2

EP 0 150 798 B1

FIG. 4

FIG. 3

FIG. 5

FIG. 7

FIG. 6

2

FIG. 8

FIG. 9

FIG. 10

FIG. 11

FIG.12

FIG.13

FIG.14

FIG.15

FIG. 16

FIG. 17

FIG. 18

FIG.19

FIG. 20

FIG. 21

FIG. 22

FIG. 23